# EUROPEAN PATENT APPLICATION

(11) **EP 1 594 278 A1**
(43) Date of publication of application: **09.11.2005**
(21) Application number: 04291137.0
(22) Date of filing: 04.05.2004
(51) Int. Cl.: H04L 29/06, H04L 12/56

(54) **Method and apparatus for disseminating, storing and collecting information in a communication network**

(71) Applicant: Hitachi, Ltd., Chiyoda-ku, Tokyo 101-8010 (JP)
(72) Inventor: Yamamoto, Lidia, 06650 Opio (FR); Hayashi, Masato, Sagamihara-shi, Kanagawa 228-0805 (JP)
(74) Representative: Beetz & Partner

(57) **Abstract**

The invention relates to a method and an apparatus for disseminating, storing and collecting information in a communication network comprising a plurality of network nodes, in particular an ad-hoc mobile network.

The method for disseminating, storing and collecting information comprises the steps of:
broadcasting a query message indicating a requested information to network nodes;
upon receiving the query message, a receiving node which holds the requested information replies to the inquiring node by returning a response message including the requested information, and a receiving node which cannot respond to the received query message performs the steps:
   storing the query message for a predetermined DW and listening in the network for a response message corresponding to the query, and
   discarding the query message if a corresponding response is received within the predetermined query message delay time, or
   forwarding the query message to other nodes if no corresponding response is received within the predetermined query message delay time.

## Description

The invention relates to a method and an apparatus for disseminating, storing and collecting information in a communication network comprising a plurality of network nodes, in particular an ad-hoc mobile network.

The dissemination, storage and collection of information in a distributed database in a network is a common problem for many applications and purposes. Perhaps, the most prominent lookup services are the domain name service (DNS), which resolves a host name to the corresponding
IP-address, and Internet search engines. For peer-to-peer (P2P) application layer overlay networks, the resolution of queries searching for objects in the network is very important. In particular if the network is self-organizing and decentralized without a central index server, a fully distributed search for collecting the required information, such as the location of a file or document, is necessary.

A distributed search service for peer-to-peer file sharing, which enables searching for files distributed across mobile devices, is known as passive distributed indexing (PDI) (C. Lindemann und O. Wald-horst, "A Distributed Search Service for Peer-to-Peer File Sharing in Mobile Applications", Proc. 2^{nd} IEEE Conf. on Peer-to-Peer Computing, Linköping, Sweden, pp. 71-83, Sept. 2002). Since PDI is designated for mobile networks, it can benefit from node mobility and the underlying broadcast mechanisms available for mobile networks for the dissemination of information to P2P nodes**.** Queries indicating the requested information are sent in broadcast to all one-hop
neighbours of the querying node. Responses to queries are also sent in broadcast to all one-hop neighbours of the responding node. This implies that even if a node is not looking for a particular answer to a query, it listens to ongoing responses and updates an internal index cache for storing received information. Nodes moving to other regions in the network carry this information in the cache and may broadcast query responses in the new zone. In this way, popular entries will be disseminated to several nodes. This mechanism is called epidemic dissemination. However, in PDI there is no guarantee that the response to a query will be found.

In order to increase the researched network region, it has been proposed to extend the propagation of queries to multi-hop neighbours of the inquiring node. However, since query messages are flooded unreliably over a specified number of hops based on a predetermined time-to-live (TTL) value, there is also no guarantee that at least one node that contains the response will be reached by at least one query message. If the TTL is set too short, the query will be restricted to the vicinity of the inquiring node, while the response might be stored far away. PDI relies on epidemic dissemination for information propagation and, thus, on node mobility and frequent queries. If the nodes are moving a lot and queries for a given item are frequent, the item will spread to many nodes. In this case, it becomes very likely that a node in the vicinity of the enquiring node contains the searched item. However, if node movement is insufficient or queries are relatively rare, PDI might not give a satisfactory success rate (the rate of queries for which the correct response is found), in particular, if the TTL is small. On the other hand, if the TTL is set too high, queries might contribute to a network congestion due to the large amount of broadcast messages generated.

One way to improve the success rate would be to proactively ensure that items become widely spread. However, without control neither on node movement nor on the query frequency, epidemic dissemination is usually not sufficient. Further, proactive information dissemination schemes tends to excessively populate the caches of the network nodes, thus requiring large storage space in the nodes. Since nodes in mobile ad-hoc networks may be small devices with insufficient storage space, this method is poorly suited to such networks.

Another way to improve the success rate could be to ensure that the query will propagate as far as necessary in search for a response, *e*.*g*., by using large TTLs. This means ultimately flooding the whole network with query messages, can cause congestion in the network, and can disrupt existing application traffic.

In A. Qayyum, L. Viennot, and A. Laouiti, "Multipoint Relaying for Flooding Broadcast Messages in Mobile Wireless Networks", 35^{th} Annual Hawaii International Conference on System Sciences (HICSS'2002), a method called multipoint relay (MPR) to decrease the number of broadcast message copies generated in a network is described. It consists in identifying redundant nodes in the broadcast distribution graph and preventing those nodes from relaying broadcast messages. Thus, each node selects its MPR node set, which is defined as the set of neighbours allowed to relay broadcast messages for the given node. Since this minimum MPR set selection problem is NP-Complete, a heuristic to compute an MPR set in polynomial time, that is close enough to the minimum, is proposed.

It is an object of the present invention to provide a method and an apparatus for disseminating, storing and collecting information in a communication network, wherein the number of broadcast messages is reduced such that flooding of the network is controlled and restricted to reasonable bounds as close as possible to the minimum necessary.

This object is achieved by the independent claims. The dependent claims refer to preferred embodiments of the invention.

In a method for disseminating, storing and collecting information in a communication network according to the invention, a querying message indicating requested information is broadcast to network nodes. For the purpose of the invention, the communication network may be any kind of wireless or wire-line communication network which allows the distribution of messages to a plurality of network nodes using a broadcast mechanism. Preferred networks are ad-hoc networks and peer-to-peer network overlays. A network node may be any device which is capable to communicate in the network. Preferred network nodes are work stations, mobile computers such as laptops, handheld or palmtop computers, or mobile communication devices such as smart phones, communicators, etc.

Upon receiving the query message, a receiving node which holds the requested information replies to the inquiry node by returning a response message including the requested information. Since the query message is propagated in the network by broadcast, it is possible that a plurality of nodes may be able to resolve the query and send respective response messages which travel through the network towards the inquiring node. Thus, the inquiring node which initiated the query broadcast may receive several answers for the requested information.

A node, which receives a query message and which cannot respond to the received query message, stores the query message for a predetermined query message delay time and listens in the network for a response message corresponding to the query. This is different from the prior art, where a query message is immediately forwarded by broadcast to flood a large part of the network in order to ensure that at least one node that contains the response will be reached.

According to the invention, the query message may be discarded if a response corresponding to the query is received within the predetermined query message delay time. If no corresponding response is received within the query message delay time, the query message is forwarded to other nodes. Thus, the query message is only further propagated and a respective network load imposed when no corresponding response is detected by a node which cannot itself resolve the query. If, however, the query is already resolved, it is not necessary to propagate the query message further. In practice such situations may happen frequently when a network node in the neighborhood has the answer to resolve the query and immediately replies. Since the response message is broadcast by the replying node, it may be overheard by a node which listens for it during the query message delay time. In this case, the listening node may mark the query as already replied without further propagating it to other nodes. This restricts unnecessary query propagation and reduces the respective network traffic significantly.

In order to improve the success rate for queries, a node which receives a response message may store the information received therewith. This allows the receiving node to respond to a respective query inquiring the same information in the future. Thus, information which is frequently requested is propagated in the network so that respective queries may be resolved more likely. Also, the response may be generated by a node closer to the inquiry node, thus further reducing network traffic.

Upon receiving a response message, a receiving node which is not the inquiring node of the corresponding query may determine whether the node has forwarded the respective query message corresponding to the received response. If it is determined that the node has not forwarded the respective query message before, it may be concluded that the node is not part of the forward path from the inquiring node to the replying node, and the received response message may be discarded, after its corresponding value has been stored in the information cache. On the other hand, if the node has already forwarded the respective query message before, it lies on the forward path of the query message, and the received response message may be forwarded to the predecessor node in the query message path, *i*.*e*., the node from which the corresponding query has been received. This allows the propagation of the response message along the backwards direction of the query message path and concentrates the response propagation towards the inquiring node. However, since on the physical or data link layer the response messages are transmitted via broadcast, also other neighboring nodes within a one-hop distance, e.g., in the case of a wireless network the radio coverage of the sending node, receive the response messages and may store the received information for later queries. Thus, the transmitted information is distributed in a region around a one-hop distance of the response message return path.

Preferably, a received response is discarded if the receiving node, which has also forwarded the respective query message before, already has replied to the query. This means that the receiving node has already resolved the respective query and/or has already forwarded a corresponding response message before. In both cases, the inquired information has already passed towards the inquiry node, and the newly received response message must not be forwarded. This further reduces network traffic because redundant response messages are eliminated.

Information received with a response message may be stored for a predetermined information holding time. It is preferred that any stored information item is deleted after its respective holding time expires. Thus, old information which may be outdated may be removed and a potential incorrect resolution of a query is prevented. This allows the processing of dynamic information which is occasionally changed in some node. The information cached in network nodes disappears after a while if it is not continuously confirmed. The information holding time for cached information items may be set depending on the dynamic nature of the cached information. For example, the information holding time may be set globally for all information items or determined individually based on the type of the information item.

According to a preferred embodiment of the invention, a query message comprises a key field to indicate the requested information. The respective response message may comprise an additional value field for specifying the requested information. Upon receiving a query message, the receiving node may determine if it holds the requested information by comparing a received query key with respective stored keys for information held in the node. The information stored in a node is preferably organized as a list of <key,value> pairs for allowing an efficient information retrieval and access.

A node which has received a query message may decide whether to forward the received query message based on a network distance that the received query message has traveled through the network starting from the inquiring node. This restricts the propagation of the query message to a region within a maximum network distance around the inquiring node. Preferably, the network distance is a hop count of the query message, *e.g.,* a time-to-live (TTL) value.

In order to further reduce network traffic induced by the query broadcast, a received query message may be discarded if the receiving node has forwarded a similar query message before, *e.g.* a query having the same key and origin.

Upon receiving a query message, a receiving node may store information relating to the network identity of the node from which the query is received and/or information relating to the network identity of the inquiring node. This has the advantage of allowing the determination of the backward path towards the inquiring node, which may be used for response message propagation.

According to a preferred embodiment of the invention, a query entry comprising an identifier of the inquiring node (*e.g.* its IP-address), a sequence number that identifies the query, an identifier of the node from which the query is received (*e.g.* the IP-address of the previous node), the received query key, the TTL value of the query, and/or state information for the query is generated and stored for each received query message. Based on such query entries, it may be easily determined if an identical query message has been forwarded before. The query state information may, for example, indicate if the query has already been replied. In order to reduce the necessary space for storing query entries, it may be suitable to remove older entries and to keep only entries for queries recently received.

Preferably, the inquiring node, which receives a response message corresponding to a query message sent before, may under certain conditions (that are specified later) broadcast a stop-query-propagation message for canceling the propagation of the sent query message in the network. If the stop-query-propagation message is forwarded by receiving nodes without delay, it may catch up with the propagation of the corresponding query message, because the query is delayed for the query message delay time in each hop. This has the advantage that, by receiving the faster traveling stop-query-propagation message, a node, which has received the corresponding query message and has not yet forwarded it because it is listening for corresponding responses, may abandon the processing of the query message and discard it. Thus, the propagation of the query message may be canceled after the inquiring node receives the desired response, and unnecessary network load is reduced.

It is preferred that an inquiring node first determines whether it is useful to broadcast a stop-query-propagation message in order to avoid that late stop-query-propagation messages do not catch up with the corresponding query within a reasonable time or a given network region. Therefore, an elapsed time interval DR between the sending of the query message and the reception of the corresponding response message may be measured. The decision to broadcast the stop-query-propagation message may be based thereupon.

According to a preferred embodiment of the invention, the decision to broadcast a stop-query-propagation message is based on the calculated elapsed time DR, the predetermined query message delay
time DW, and/or a given query-message-propagation distance Hmax. This allows to calculate if a stop-query-propagation message may catch up with the corresponding query within the given query-message-propagation distance Hmax and provides a useful decision criterion.

A node which receives a stop-query-propagation message may determine whether it has already received the corresponding query message. In the negative, there is no need for the node to forward the stop-query-propagation message and it may be discarded. This helps to reduce unnecessary network traffic, because it prevents the propagation of stop-query-propagation messages in network regions which have not been affected by the corresponding query.

A node, which receives a stop-query-propagation message and determines that it has already received the corresponding query message may further discard the query message if it has not yet been forwarded. In this case, the stop-query-propagation message has catched up with the query and inhibits its further propagation. The node may further discard the received stop-query-propagation message since it has achieved its purpose and no query to be quenched is expected in the forwarding direction of the node. This further helps to reduce network traffic because stop-query-propagation messages which become redundant are eliminated.

A node which receives a stop-query-propagation message may further determine whether it has already forwarded a respective response message. If a response message related to the query message identified in the received stop-query-propagation message has already been forwarded (i.e., the query state is "REPLIED"), there is no need for the node to forward the received stop-query-propagation message and it may be discarded, because the query has already been resolved and is not propagating anymore. Thus, unnecessary network traffic is circumvented.

If a node receives a stop-query-propagation message and determines that it has already forwarded the corresponding query message, it may forward the received stop-query-propagation message to other nodes without delay so that the stop-query-propagation message may catch up with the query ahead.

In order to make additional usage of a propagated stop-query-propagation message, the message may comprise the requested information which has been received by the inquiring node with the corresponding response message. Preferably, a network node which receives a stop-query-propagation message stores the information received therewith. Thus, the node may possibly resolve a respective later query and respond thereto with the stored information. This disseminates frequently inquired information in the network, increases query success rates and reduces network traffic.

According to a preferred embodiment of the invention, a network node, before broadcasting a query message, determines a set of network nodes which are selected for forwarding broadcast messages from the node. The node may inform the respective nodes of being selected as forwarding nodes for the node by sending respective selection messages. Upon receiving a selection message, a receiving node knows that it is a designated forwarding node for the sending node.

Preferably, the selection of nodes is performed so as to ensure that all nodes within a given network distance receive broadcast messages from the selecting node, whilst the reception of replications of broadcast messages is reduced. This selection of nodes may be performed by the multipoint relay (MPR) algorithm which applies a heuristic selection strategy for designating retransmission nodes. The MPR algorithm selects for each node a multipoint relay set which is designed to reduce network flooding by redundant broadcast messages.

By determining a set of forwarding nodes, query messages and stop-query-propagation messages are propagated only by selected nodes in the network, wherein multiple receptions of copies of the same message in a multi-hop transmission are reduced. This further reduces the network load induced by message broadcast and prevents network congestion.

A network node which receives a broadcast message, in particular a query message or a stop propagation message, may determine whether the node is a selected forwarding node for the sending node from which the node received the broadcast message. Only if the node is a selected forwarding node of the sending node, the received broadcast message is forwarded to other nodes, otherwise it is discarded.

In an apparatus for disseminating, storing and collecting information to/from a set of network nodes in a communication network, the following may be provided:
- Sending means adapted for broadcasting, to other network nodes, query messages indicating requested information and response messages including the requested information. The sending means may be implemented by any network interface which can broadcast messages via the communication network.
- Receiving means adapted for receiving query messages and response messages from other network nodes. The receiving means may be implemented by any network interface which can receive broadcast messages from the communication network.
- A message buffer, also called Query Cache, for storing received query messages. Received query messages may be stored in the message buffer in query entries for a predetermined message holding time. After the respective message holding time for a message has elapsed, the message may be discarded from the message buffer.
- Information storage, also called Index Cache, for storing information which is intended for the access from other network nodes. The stored information may be information received with a response message or other information which is held by the node.
- Query propagation control means adapted to determine whether information requested with the received query message is stored in the information storage. If it is determined that the requested information is held in the information storage, the query propagation control means return a response message via the sending means to the node which initiated the query broadcast. Otherwise, the query propagation control means store the query message in the message buffer and listen, via the receiving means, for a predetermined query message delay time for a response message corresponding to the received query. If a corresponding response is received within the query message delay time, the query propagation control means mark the query as replied without further propagating it. If no corresponding response is received within the query message delay time, the query propagation control means forward, via the sending means, the query message to other nodes in the network.

The communication network is preferably an ad-hoc network or a peer-to-peer network, wherein the sending and/or receiving means are adapted to send/receive messages to/from the ad-hoc network or the peer-to-peer network.

Since, according to the invention, a query message is only propagated when no respective answer is received within the query message delay time, unnecessary query broadcasts for queries, which already have a corresponding response traveling back to the inquiring node, are prevented.

The apparatus may further comprise response propagation control means which, upon receiving a response message that has not been inquired by the apparatus, are adapted to determine whether the apparatus has forwarded the respective query message. In the positive, the response propagation control means forward the received response message to the node from which the corresponding query has been received. Otherwise, the received response message is discarded. Accordingly, the response propagation control means control the response propagation in the network along the backwards direction of the query propagation path.

Information storage maintenance means may be provided to hold information received with a response message, in particular as a key-value pair. Preferably, the information is held in the information storage for a predetermined information holding time. After its respective information holding time has elapsed, an information item may be deleted from the information storage by the information storage means. This allows storing dynamic information which should be deleted from the information cache when outdated.

The query propagation control means may be further configured to decide whether to generate a stop-query-propagation message for canceling the propagation of an already sent query message in the network. This decision may be made when a response message corresponding to the query message is received. If it is decided to cancel the query propagation, the stop-query-propagation message is broadcast, via the sending means, to other nodes in the network. This allows to reduce unnecessary network traffic induced by the broadcast of a query message which has already been resolved.

The query propagation control means may be further configured to control the forwarding of a received stop-query-propagation message depending on whether the corresponding query message or a response message related thereto has already been received and/or forwarded by the apparatus. If the query propagation control means decide to forward a received stop-query-propagation message, those is immediately forwarded without delay. Thus, the stop-query-propagation message may catch up with a query message ahead and cancel its further propagation.

According to a preferred embodiment of the invention, forward node selection means to determine a set of forwarding nodes are provided. The forward node selection means may inform the respective nodes of being selected by sending respective selection messages to the selected nodes.

Preferably, the query propagation control means are further configured to determine whether the apparatus is a selected forwarding node for the node from which a broadcast message is received. If the apparatus is a selected forward node for the sending node, the query propagation control means forward the received broadcast message to other nodes. Otherwise, the received broadcast query message or stop-query-propagation message is discarded. Thus, the propagation of broadcast messages in the network is performed only by designated nodes which are selected in order to reduce network flooding by multiple transmissions to receiving nodes.

Accordingly, the present invention reduces the number of broadcast messages during information dissemination and collection such that flooding is controlled and restricted to reasonable bounds, as close as possible to the minimum necessary. In addition, the success rate for queries is increased by ensuring that the query will propagate as far as necessary in search for a response, and by dissemination of information in the network.

These and other potential objects, features and advantages of the present invention will appear more fully from the following detailed description of preferred embodiments of the invention. It is to be understood, however, that the scope of the present invention is not limited to the given embodiments shown in the accompanying drawings, wherein
Fig. 1 shows schematically an apparatus for disseminating, storing and collecting information from a set of nodes according to an embodiment of the invention;
Fig. 2 illustrates schematically the epidemic dissemination mechanism;
Fig. 3 shows a flow diagram illustrating the processing steps of the lazy-query-propagation algorithm;
Fig. 4 illustrates the response propagation algorithm which is executed at every node upon reception of a response message;
Fig. 5 illustrates the algorithm for the inquiring node, including the decision whether to send a quench wave or not;
Fig. 6 illustrates the quench wave propagation algorithm which is executed by every relay node upon reception of a quench message;
Fig. 7 shows schematically an example for illustrating the selection of forwarding nodes for broadcast messages;
Fig. 8 schematically illustrates the use of the forwarding node selection principle for the information dissemination, storage and collection method according to the invention; and
Fig. 9 shows schematically a block diagram of the hardware structure of an apparatus according to the present invention.

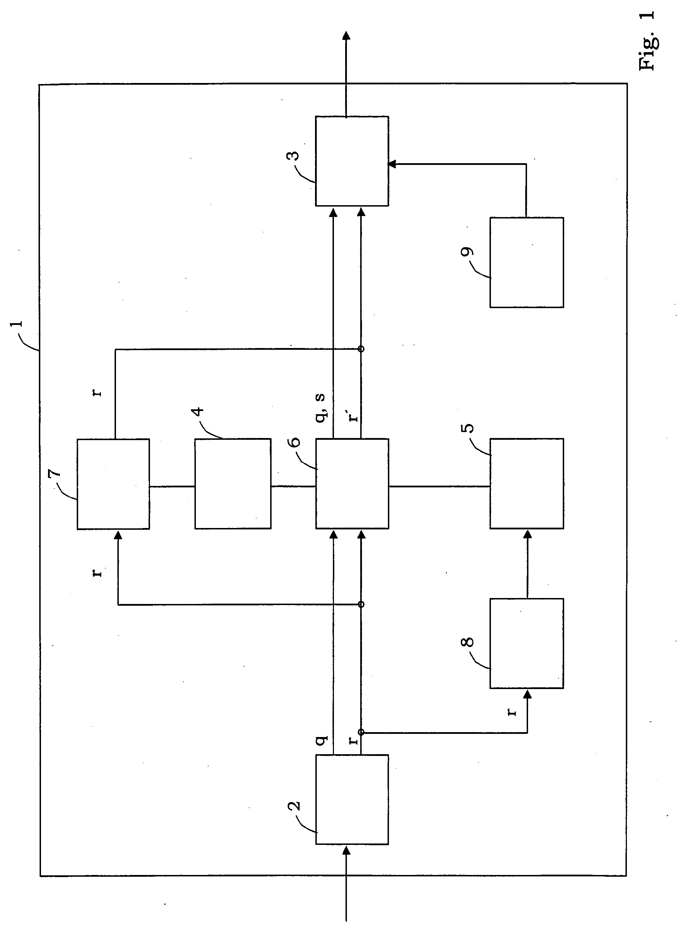

Fig. 1 shows schematically an apparatus for disseminating, storing and collecting information from a set of network nodes in a communication network according to an embodiment of the invention. The apparatus 1 comprises receiving means 2 adapted for receiving query messages q and response messages r via the communication network from other network nodes. Query propagation control means 6 receive query messages and response messages from the receiving means 2. The query propagation control means 6 are adapted to determine whether information requested with the received query message q is stored in information storage 5. If the respective information is available from the information storage 5, a response message r' is transferred to sending means 3 which are adapted to broadcast response messages including the requested information to other network nodes. The response message r' is addressed to the inquiring node of the corresponding query and returned to this network node using a response propagation algorithm which is later described in more detail.

If the inquired information is not available in the information storage 5, the query propagation control means 6 store the received query message q in a message buffer 4. In addition, the query propagation control means 6 listen for a predetermined query message delay time DW, via the receiving means 2, for a response message r corresponding to the stored query q.

If a corresponding response r for the stored query q is received within the query message delay time DW, the query propagation control means 6 mark the query q stored in the message buffer 4 as replied without further forwarding it. Since an answer for the query is now available, there is no need to further propagate the query in the network.

If no corresponding response is received within the query message delay time DW, the query propagation control means 6 send the query q to the sending means 3 for forwarding it to other nodes. In this case, no answer for the query q is available so that it must be further propagated to other nodes to allow it to be possibly resolved.

Response propagation control means 7 determine, upon receiving a response message r which corresponds to a query message q which has not been initiated by the apparatus 1, whether the apparatus 1 has forwarded the respective query message q corresponding to the received response r. If this is the case, *i.e.,* the query message q passed by the apparatus 1 in its forward propagation, the apparatus 1 is part of the query transmission path from the inquiring node to the node which resolved the query. Thus, the received response message r is forwarded to the node from which the corresponding query q has been received. If the apparatus 1 does not lie on the forward query path, there is no need to forward the received response message r and it is discarded.

Information storage maintenance means 8 also receive response messages r from the receiving means 2 and control the storage of the received information in the information storage 5. In particular, information received with response messages is held in the information storage 5 for a predetermined information holding time. After the respective information holding time has expired the stored information is deleted from the information storage 5. Thus, information which is not confirmed by receiving respective response messages may be discarded because it may be outdated.

After receiving a response message r corresponding to a query message q which has been initiated by the apparatus 1, the query propagation control means 6 decide whether to generate a stop-query-propagation message s for canceling the propagation of the already sent query message. The stop-query-propagation message is broadcast to other nodes in the network which forward it without delay, if it is not discarded by the quench propagation algorithm which will be described below.

Forward node selection means 9 determine a set of network nodes which are selected for forwarding broadcast messages from the apparatus 1. Selection messages are sent, via the sending means 3, to the selected nodes in order to inform these of being selected as forwarding node.

Based on received selection messages the query propagation control means 6 determine whether to forward a received broadcast message for the sending node from which the broadcast message has been received. Thus, the broadcast of query messages or stop-query-propagation messages is restricted to a selected set of nodes and controlled in order to avoid excessive network flooding.

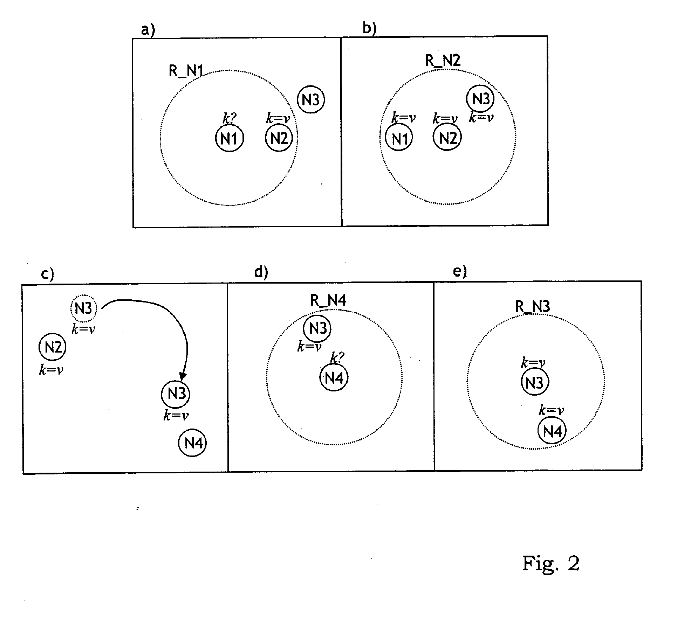

Fig. 2 illustrates schematically the epidemic dissemination mechanism which is the basis of the passive distributed indexing (PDI) algorithm.

In step a), a query asking for the value of k is broadcast by the central node N1 within its broadcast region R_N1. Node N2 is able to resolve this query by providing the value for k: k = v.

In step b), node N2 broadcasts the respective response within its broadcast region R_N2. This response is received by the nodes N1 and N3. Both nodes store the received information (k = v) in their respective index caches.

Step c) illustrates the movement of node N3 from its initial position (close to node N2) to a new location (close to node N4).

In step d), a new query inquiring the value of k is broadcast by node N4 within its broadcast region R_N4. This query is also received by node N3.

Step e) shows the situation when node N3 returns a response for the inquiry to node N4.

This response is made possible because node N3 has received the respective information in step b) and moved to another network area, carrying the new information. In this way, entries are disseminated in the network. The mechanism is called epidemic dissemination because it works like an infectious disease: "infected" nodes "contaminate" other nodes with information they have in their local caches. However, as already mentioned, this method relies on a high node movement and it does not guarantee that a given stored item will be found when needed.

In order to increase the searched network area, queries may be propagated over a number of hops determined by the inquiring node in the form of a TTL_query field included in the query message. The TTL_query value determines the maximum number of hops a given query may traverse. After traversing TTL_query hops, the query message is discarded. In order to make sure that the query can reach distant nodes, the TTL_query should be as large as possible (e. g., the entire diameter of the ad-hoc network). However, this may produce too many broadcast messages and cause network congestion.

According to the invention, query messages are propagated in a lazy way to reduce unnecessary query propagation. This is called the lazy-query-propagation mechanism. It works as follows:

A node that receives a query (and is allowed to propagate it as explained below) and has no answer for it in its local PDI index cache, waits for a period DW in which it listens for possible responses to the query. If within the period DW the node overhears a response to the query, it caches the response (epidemic dissemination) and takes no further action concerning the query. If, on the other hand, the node does not hear any response to the query within DW, after the interval DW has passed, the node re-broadcasts the query to its immediate neighbours. In this way, only the queries for which no response is available in the vicinity are propagated to other regions of the network.

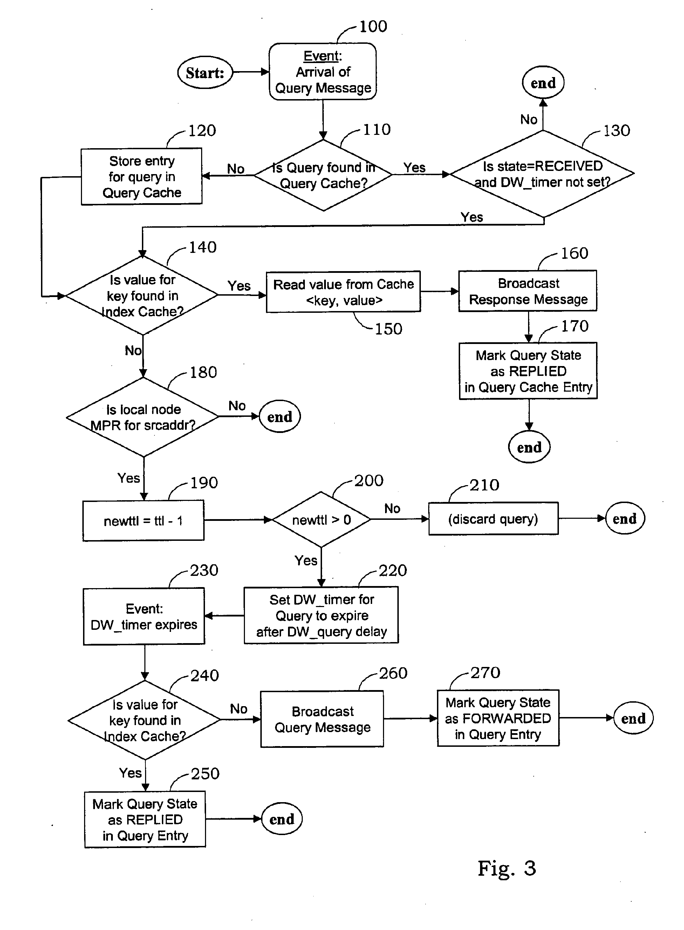

Fig. 3 shows a flow diagram illustrating the processing steps of the lazy-query-propagation algorithm which is performed in a network node configured to participate in an information dissemination, storage and collection protocol according to the invention.

This algorithm is executed every time a query message is received in step 100. The format of the query message is the following:
<srcid, seqno, key, ttl>
where:
- srcid is the identifier of the original inquiring node (e.g. its IP address);
- seqno is a sequence number that identifies the query within srcid;
- key is the key that is being looked up;
- ttl is the TTL_query field described above.

In step 110, it is determined whether the query is found in message buffer 4 (see Fig. 1), also called query cache. The query cache 4 stores recent queries received by the local node. It contains entries of the form:
<dstaddr, srcid, seqno, key, ttl, state>
where:
- dstaddr is the destination address that should be used in a response message for the query. This is the source address (at routing layer, e.g. the source IP address) of the packet that carried the query message;
- srcid, seqno, key, and ttl are the corresponding fields in the query message;
- state is the current state of the query. The state field can take one of the following values:
   o RECEIVED: query has been received but not replied.
   o REPLIED: query has been replied.
   o FORWARDED: query has been relayed to other nodes.

If a new query is received, a respective query entry is stored in step 120 in the query cache 4, with initial state "RECEIVED", as follows::
QueryEntry=<srcaddr, srcid, seqno, key, ttl, state=RECEIVED>.

If the query is found in the query cache 4, it is checked in step 130 whether the state for the query is "RECEIVED" and whether the timer for the query message delay time DW is not set. If this condition is true, the query has been received but not yet forwarded and the process continues with step 140.

In step 140, it is determined whether a value for the key included in the query message is found in the information storage 5. The information storage 5, also called index cache, is a cache of <key,value> entries for stored data items.

If the inquired information is available, it is read in step 150 from the information storage 5. A response message including the inquired value for the key is broadcast in step 160. The format for a response message is the following:
<dstaddr, srcid, seqno, key, value, repttl>
where:
- dstaddr is the destination address of the response message, found in the query cache entry for the corresponding query;
- srcid, seqno, and key are the corresponding fields found in the query cache entry;
- value is the value for the key, found in the corresponding index cache entry <key,value>;
- repttl is the default TTL for a response message.

In step 170, the state of the query in the respective query cache entry is marked as "REPLIED". Thus, the query entry is then as follows:
QueryEntry=<srcaddr, srcid, seqno, key, ttl, state=REPLIED>.

If the inquired information is not available, it is determined in step 180 whether the local node is a selected forwarding node for the node from which the query has been received. This means, e.g., that the node is in the MPR set of the sending node. If the local node is not in the MPR set of the sending node, the received query is discarded.

Otherwise, the TTL of the query is decremented in step 190. If it is determined in step 200 that the decremented TTL does not allow a further propagation of the query via another hop, the query is discarded in step 210.

In step 220, a timer DW_timer for indicating the query message delay time DW for the received query is set. After the timer expires in step 230, it is determined in step 240 if a value for the query key is now found in the index cache 5.

In the affirmative, a response message corresponding to the query has been received within the query message delay time DW. In step 250, the query state in the query entry is marked as "REPLIED". The query entry is then as follows:
QueryEntry=<srcaddr, srcid, seqno, key, ttl, state=REPLIED>.

If no corresponding response message has been received, the query message is broadcast to other network nodes in step 260. The format of the query message is now as follows:
QueryMsg=<srcid, seqno, key, newttl>.

The source address of the query message packet is set to the local address of the node. Thus, a receiving node can determine the identity of the sending node.

The query state is now marked in step 270 as "FORWARDED". The query entry will now be as following:
QueryEntry=<srcaddr, srcid, seqno, key, ttl, state=FORWARDED>.

Due to the lazy query propagation, a query message is delayed and an intermediate node listens for responses before relaying the query by broadcast. A node that receives a query starts a timer and listens to the responses of others. If a response for the queried item is heard, the node does not propagate the query further.

This lazy-query-propagation algorithm implies that the algorithm for propagating response messages makes use of the state field of a query entry in the query cache.

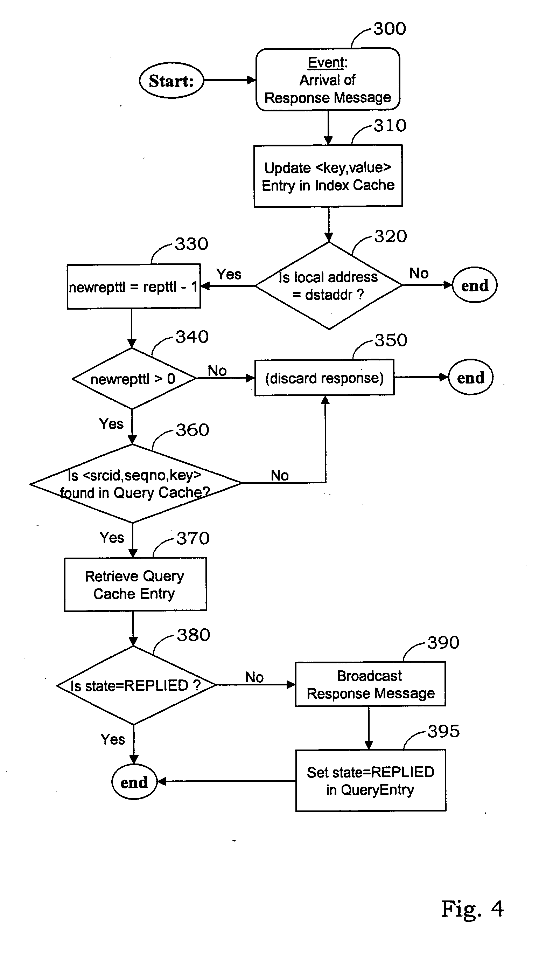

Fig. 4 illustrates the response propagation algorithm which is executed at every relay node upon reception of a response message.

In step 300, a response message of the following format
RepMsg=<dstaddr, srcid, seqno, key, value, repttl>
is received, and in step 310 the respective entry in the index cache is updated.

In step 320, it is determined whether the local address is the destination address dstaddr of the response message. If not, the local node is not the destination node of the response message and may discard the received response. However, please note that the information received with the response has already been used to update the index cache. Thus, the information broadcast with the response is utilized independent of the forwarding of the response message.

In steps 330, 340 and 350 it is determined whether the hop count of the received response message allows a further propagation of the message. This helps to prevent the flooding of the network with response messages which are wandering around erratically by limiting the maximum number of times a response message is forwarded.

In step 360, it is determined whether the corresponding query for the received response message is found in the query cache. In the negative, the local node is not responsible for propagating the received response and discards it in step 350.

Otherwise, the respective query is retrieved from the query cache in step 370 and its state is checked in step 380. If the query state is "REPLIED", meaning that a corresponding response has already been handled by the local node, the received response may be discarded. This may be the case if the local node has already resolved the query before or has already forwarded a respective response.

A response message of the following format
RepMsg=<srcaddr, srcid, seqno, key, value, newrepttl>
is broadcast in step 390, and the state of the query is changed to "REPLIED" in step 395.

The response propagation algorithm has the advantage of focusing the response propagation along the backwards direction on the path of the particular query message which has been resolved in a responding node and which triggered the propagation of the particular response; and extracting response messages comprising new information on their return path to the inquiring node; redundant responses may be singled out and discarded. Thus, the network load imposed by the propagation of response messages is reduced.

After an inquiring node receives a reply to its query, the query and response messages that might still be in transit are useless. A lot of useless traffic can thus be avoided by stopping the query and response propagation flows in time. If the inquiring node receives a reply sufficiently early, it is still possible to attempt to stop these messages from propagating further. If the inquiring node decides that it is still time to stop the message, it broadcasts a stop-query-propagation message, also called quench message. In contrast to the query message, the quench message is not delayed at the relay nodes. It is propagated as quickly as possible in order to stop as many query and response propagations as possible. The resulting multi-hop broadcast of a quench message is called a quench wave.

However, issuing a quench message at a too late stage can contribute to flood the network and cause further congestion, while at the same time being ineffective in stopping already propagated messages. The usefulness of a quench wave is, therefore, limited to a short time period. Accordingly, after receiving a response to its query, the inquiring node must decide whether to issue a quench wave or not. Let DR be the time it takes from the moment the inquiring node issues a query message to the moment it receives a corresponding response message. Let DT be the average time a message takes to go from one hop to another. Given node N0 and its one-hop neighbor N1, the time DT it takes from N0 to N1 includes the queuing delay at the outgoing interface of N0 towards N1, plus the link propagation delay from N0 to N1, plus any processing delay at N1. Recall that, according to the lazy-query-propagation algorithm, a relay node waits for the query message delay time DW before considering the possibility of further propagating a received query message.

The quench wave is able to stop the query wave when the former meets the outmost border of the latter. The query wave is slower to propagate than the quench wave, due to the waiting time DW. On the other hand the quench wave cannot start earlier than DR after the query wave. Using DR, DT, and DW it is possible to obtain the value H, which is the distance in hops from the inquiring node to the zone where the two waves meet. This can be calculated as follows:
T = DR + DT*H = (DW + DT)*H => H = DR/DW,
where T is the time necessary for the two waves to meet.

Therefore, it suffices to know DR and DW in order to calculate H (DT is not necessary). DR can be easily measured at the inquiring node by reading the current time at the moment the query is sent, and reading it again when the response is received. DR is simply the interval between query and response. As for DW, it can be a parameter of the protocol, with a well-known value. Relay nodes could use DW as the query delay, or a random delay with average DW.

The decision consists in setting a threshold beyond which it is considered harmful to send quench messages. Let Hmax be this threshold. Then the decision algorithm is expressed by the following rule:
If H < Hmax then issue quench wave else do nothing.

The value of Hmax can be fixed as a parameter of the protocol, or can be dynamically determined according to measured network properties, such as network diameter, number of nodes, position and distribution of nodes, and so on. If information on network properties is available to the node, it can estimate the optimum Hmax that ensures there is a benefit from sending a quench wave when compared to not sending it. The benefit occurs when the quench wave results in reduction of the total number of broadcast messages in the network. This occurs when the total number of quench messages is inferior to the number of messages that would be generated should the quench wave not start.

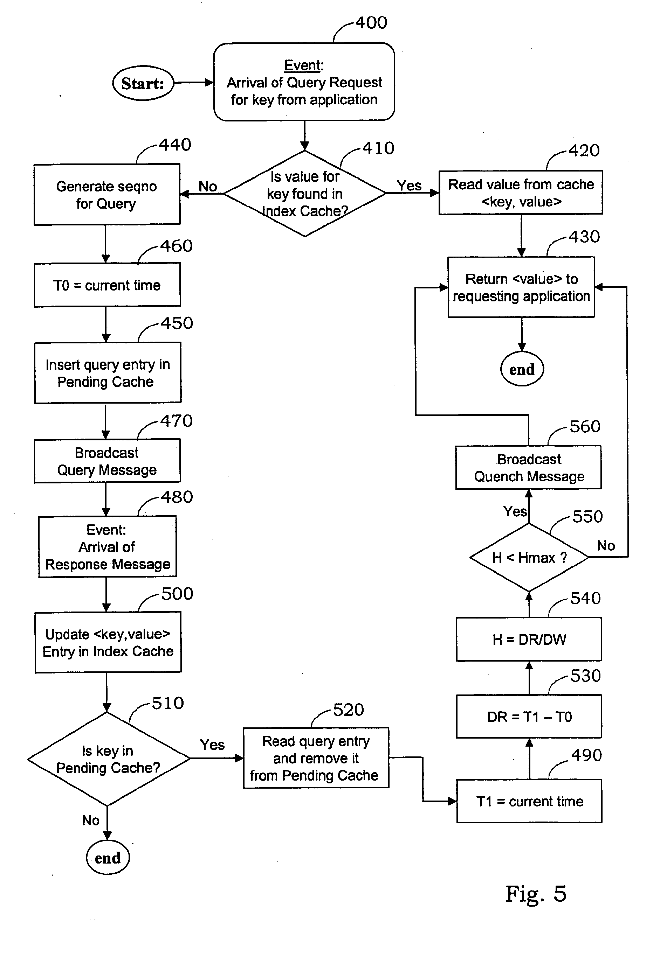

Fig. 5 shows a flow diagram to illustrate the algorithm for determining whether to send a quench wave or not. This algorithm is performed by the inquiring node from the moment it receives a query from a user application (step 400) to the moment it delivers a response to the user application in step 430.

If the requested value for the inquired key is found in the local index cache, as determined in step 410, the value may simply be read from the cache in step 420 and returned to the requesting application in step 430.

Otherwise, a respective query is generated and broadcast in steps 440 to 470. A sequence number seqno for the query is generated in step 440, the current time is read and stored in T0 in step 460, and a query entry of the following form is inserted in the pending query cache:
PendingEntry=<key,seqno,T0>.

When a response message of the following format
RepMsg=<dstaddr, srcid, seqno, key, value, repttl>
arrives in step 480, a respective entry for <key, value> is updated in the local index cache (step 500).

If the key of the received response does not correspond to an entry in the pending query cache, there is no need for further processing the received response because it does not correspond to any initiated queries of the local node (step 510).

However, if the received response message relates to a pending query, the query entry is read and then removed from the pending query cache in step 520, and the elapsed query-response interval DR is calculated in step 530 based on the time stamps T0 and T1 as determined in steps 460 and 490.

The distance H in hops from the inquiring node to the network zone where the two waves meet is calculated in step 540. The calculated value of H is compared in step 550 with the threshold Hmax. If the query wave may be catched up by the quench wave within the query-message-propagation distance Hmax, a quench message of the following format:
<srcid, seqno, key, value, ttl>
where:
- srcid is the identifier of the original inquiring node (e.g. its IP-address);
- seqno is the value of the seqno field found in the corresponding entry in the pending cache, which is the same value of seqno that had been issued within the corresponding query message;
- key is the key that has been looked up;
- value is the value found for the key (received in the corresponding response message);
- ttl is the TTL_query field, with initial value identical to the one in the query message;
is broadcast in step 560.

The decision algorithm determines whether the enquiring node should start a quench wave after receiving a response. Since the quench wave propagates as quickly as possible, it may stop ongoing query broadcasts and, thus, further reduce broadcast traffic.

Please note that according to the above quench wave decision algorithm, a response to a query might even arrive earlier than the actual response message corresponding to the query. Other nodes having sent queries about the same key will receive responses which might be overheard by the local node. An overheard response is as good a query response as the response directly targeted at the inquiring node.

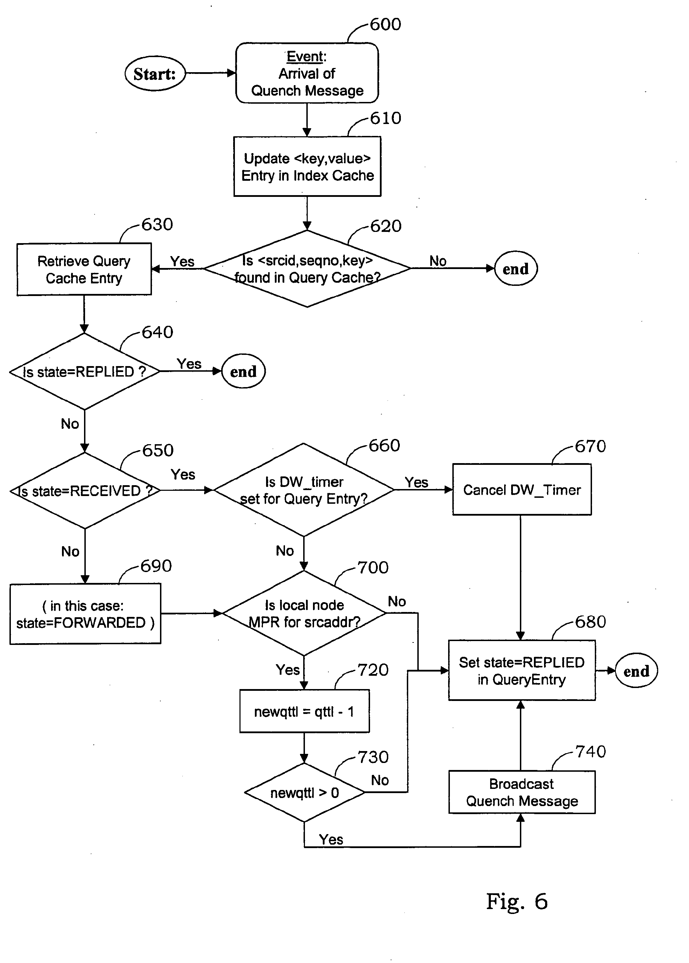

Fig. 6 shows a flow diagram illustrating the quench wave propagation algorithm which is executed by every relay node upon reception of a quench message. A quench message is received in step 600 and the respective entry in the index cache is updated in step 610.

In step 620, it is determined from the query cache whether a corresponding query has been received before. In the negative, the quench message may be discarded because no corresponding query has passed by so that it is anticipated that no query propagation is to be stopped.

In step 630, the corresponding query entry is retrieved from the query cache. If the state of the query entry is "REPLIED", it is too late for cancelling the query propagation because a respective response has already been processed.

If the state of the query is "RECEIVED", as determined in step 650, and the timer DW_timer for the respective query message delay time DW for the query is set, but has not yet expired (as determined in step 660), the quench wave has arrived early enough to catch up with the query and can circumvent the further query propagation. This is performed in step 670, where the timer DW_timer is cancelled, and in step 680, where the state for the query entry is set to "REPLIED".

If the query has already been forwarded (step 690), or if it has been received but its timer DW_timer is not set (step 660) - this may occur when the query has been received but discarded due to the hop count or because the node was not selected as forwarding node for the query -, it is determined in step 700 whether the local node is a selected forwarding node for the sending node (e.g. a member of the MPR set corresponding to the query source address). In the negative, the quench message is discarded and the query state is set to "REPLIED" in step 680.

Otherwise, the hop count of the quench message is inspected in step 720 and 730, and the quench message is forwarded in step 740. This is performed by broadcasting a quench message to other nodes.

In order to further decrease the number of broadcast message copies in a network, while at the same time ensuring that all nodes in the network will receive at least one copy of the broadcast message, redundant nodes for broadcast may be identified and those nodes may be prevented from relaying broadcast messages. Thus, a set of selected network nodes for each node are determined, which are designated for forwarding broadcast messages from the node. By applying this principle to the broadcast of query messages and quench messages, the network traffic induced by the broadcast of these messages is significantly reduced.

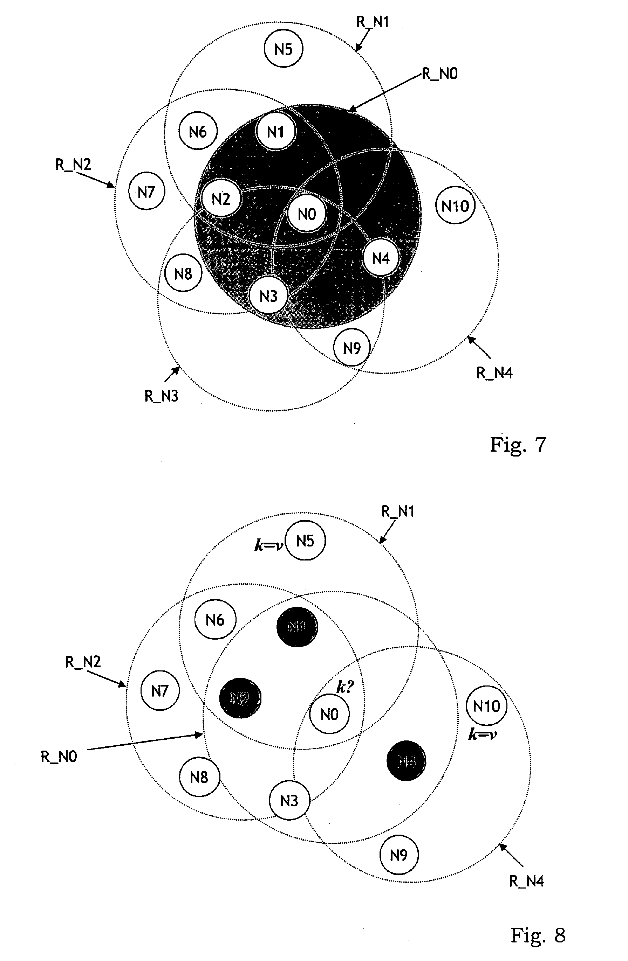

Fig. 7 shows schematically an example for illustrating the above mentioned principle. Let N0 be a node in the ad-hoc network; N1 N2, N3, N4 are one-hop-neighbours of N0. N5, N6, N7, N8, N9, and N10 are two-hop-neighbours of N0. The forward node set of N0 is {N1, N2, N4}. This is the minimum set that covers all two-hop-neighbours of N0. The reachable range of N0, *e*.*g*. its radio coverage, is the grey area in Fig. 7. When N0 wishes to broadcast a message to the whole ad-hoc network, it sends the broadcast message using a broadcast address, which causes the same message to reach N1, N2, N3, and N4. Now, in order to reach the whole network, at least one copy of the message must reach each of the nodes N5, N6, N7, N8, N9, and N10.

The forward node selection according to the MPR algorithm for the present example works as follows. Since N5, N7, and N10 are covered only by one node (N1, N2, and N4, respectively), these nodes must be in the MPR set of N0. N6 is covered N1 and N2, which are already in the MPR set. N8 is covered by N2 and N3, but N2 is already in the MPR set so it is not necessary for N3 to be included. N9 is covered by N3 and N4, but again, N4 is already in the MPR set; therefore N3 does not need to be included. N3 is therefore redundant in a broadcast transmission from N0.

Fig. 8 schematically illustrates the use of the forwarding node selection principle for the information dissemination, storage and collection method according to the invention. It shows the example of Fig. 7 for the situation where node N0 initiates a query propagation. Before broadcasting the query message for key k, N0 determines a set of forwarding network nodes, *e.g.* by the MPR algorithm. Here, N1, N2, N4 are designated forwarding nodes for N0. N3 is not a selected forwarding node for N0 and so is not allowed to rebroadcast the received query. According to this embodiment of the invention, a node that receives a query or stop-query-propagation message will only consider the possibility of propagating it further when it is a selected forwarding node for the source address from where the message has been received.

The selection of the forwarding nodes may be performed by the MPR algorithm or any other suitable selection algorithm. A respective protocol for informing the neighbouring nodes about their status may be used. There are several ways to exchange messages in order to obtain the neighbour information necessary to calculate the forwarding set. Within the OLSR routing protocol the forwarding set may be built when exchanging "HELLO" messages, which contain neighbour information also used for routing purposes. However, other protocols are also possible, for example a dedicated protocol to determine the necessary neighbour information without being coupled to OLSR.

By selecting designated forwarding nodes for broadcast messages, e.g. by using the MPR algorithm, network traffic caused by broadcasting queries and quench messages is further reduced. When a node M receives a query from neighbour node N, node M is only allowed to propagate the query to other nodes, if node M is in the forwarding node set of node N.

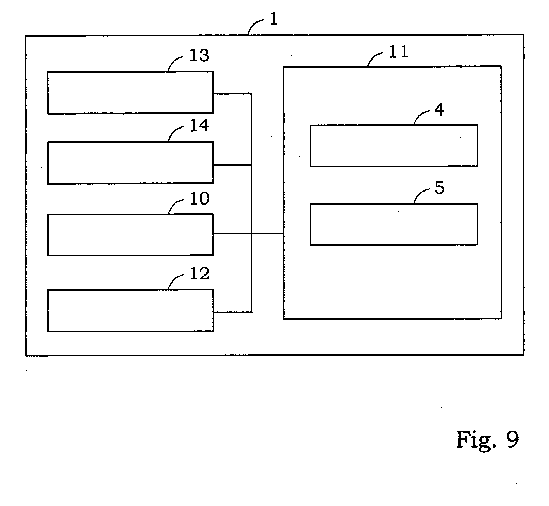

Fig. 9 shows schematically a block diagram of the hardware structure of an apparatus according to the present invention.

A processing unit 10 (CPU) is provided to execute a program stored in a memory 11. In the memory 11, respective program instructions for instructing the CPU 10 to perform the process of the sending means 3 (see Fig. 1), the receiving means 2, the query propagation control means 6, and the response propagation control means 7 are provided. The message buffer 4 and the information storage 5 are also implemented in the memory 11. Further, respective programs for instructing the CPU 10 to perform the process of the information storage maintenance means 8 and the forwarding nodes selection means 9 may also be provided in memory 11. A clock 12 serves to control the system, and to provide timer means for determining the query message delay time DW, the information holding time, and/or the elapsed time DR between sending a query message and receiving the corresponding response. The send device 13 and the receive device 14 have access to the communication network via respective network interfaces and are used for implementing receiving means 2 and sending means 3.

The present invention provides a method and an apparatus for disseminating, storing and collecting information in a communication network which are fast and efficient. This is achieved by intelligently reducing the number of broadcast messages. The present invention allows that the search for an information item may cover the whole network without causing network congestion.

## Claims

1. Method for collecting information in a communication network comprising a plurality of network nodes, the method comprising the steps of:
broadcasting a query message indicating a requested information to network nodes;
upon receiving the query message, a receiving node which holds the requested information replies to the inquiring node by returning a response message including the requested information, and a receiving node which cannot respond to the received query message performs the steps:
storing the query message for a predetermined DW and listening in the network for a response message corresponding to the query, and
discarding the query message if a corresponding response is received within the predetermined query message delay time, or
forwarding the query message to other nodes if no corresponding response is received within the predetermined query message delay time.

2. Method according to claim 1, wherein, upon receiving a response message, a receiving node stores the information received with the response message for being able to respond to a respective later query inquiring the information.

3. Method according to claim 1 or 2, wherein, upon receiving a response message, a receiving node which is not the inquiring node of the corresponding query further performs the steps:
determining whether the node has forwarded the respective query message corresponding to the received response;
in the positive, forwarding the received response message to the node from which the corresponding query has been received and marking the query as replied; and
in the negative, discarding the received response message.

4. Method according to at least one of claims 1 to 3, wherein a received response message is discarded if the receiving node, which has forwarded the respective query message before, already has replied to the query.

5. Method according to at least one of claims 1 to 4, wherein information received with a response message is stored for a predetermined information holding time and deleted after its respective information holding time.

6. Method according to at least one of claims 1 to 5, wherein a query message comprises a key field to indicate the requested information, and the method comprises:
upon receiving a query message, the receiving node determines if it holds the requested information by comparing respective stored keys for information held in the node with the received key.

7. Method according to at least one of claims 1 to 6, wherein a node which has received a query message decides whether to forward the received query message based on a network distance that the received query message has traveled through the network starting from the inquiring node, in particular based on a hop count of the query message.

8. Method according to at least one of claims 1 to 7, wherein a received query message is discarded if the receiving node has forwarded an identical query message before.

9. Method according to at least one of claims 1 to 8, wherein, upon receiving a query message, the receiving node stores information relating to the network identity of the node from which the query is received and/or information relating to the network identity of the inquiring node.

10. Method according to at least one of claims 1 to 9, wherein, upon receiving a response message corresponding to a query message sent before, the inquiring node which has sent the corresponding query message broadcasts a stop-query-propagation message for canceling the propagation of the sent query message in the network, which is forwarded by receiving nodes without delay.

11. Method according to at least one of claims 1 to 10, wherein an inquiring node, which has sent a query message and receives a corresponding response, performs the steps:
calculating an elapsed time DR between the sending of the query message and the reception of the corresponding response message;
determining whether to broadcast a stop-query-propagation message based on the calculated elapsed time DR; and
broadcasting a stop-query-propagation message in the affirmative.

12. Method according to claim 11, wherein the decision to broadcast a stop-query-propagation message is based on at least on of the calculated elapsed time DR, the predetermined query message delay time DW before a query message is forwarded, and a given query-message-propagation distance Hmax.

13. Method according to at least one of claims 10 to 12, wherein a node, which receives a stop-query-propagation message, determines whether it has received the corresponding query message and discards the received stop-query-propagation message in the negative.

14. Method according to at least one of claims 10 to 13, wherein a node, which receives a stop-query-propagation message and determines that it has already received the corresponding query message, discards the corresponding query message if the node has not yet forwarded it to other nodes.

15. Method according to at least one of claims 10 to 14, wherein a node, which receives a stop-query-propagation message, determines whether it has already forwarded a response message related to the query message identified in the received stop-query-propagation message, and discards the received stop-query-propagation message in the positive.

16. Method according to at least one of claims 10 to 15, wherein a node, which receives a stop-query-propagation message and determines that it has already forwarded the corresponding query message, forwards the received stop-query-propagation message.

17. Method according to at least one of claims 10 to 16, wherein a stop-query-propagation message comprises the requested information received with the response message which has initiated the broadcast of the stop-query-propagation message, and a network node which receives the stop-query-propagation message stores the information received therewith for being able to respond to a respective later query.

18. Method according to at least one of claims 1 to 17, wherein, before broadcasting a query message, a node determines a set of network nodes which are selected for forwarding broadcast messages from the node, and informs the respective nodes of being selected as forwarding nodes for the node.

19. Method according to claim 18, wherein the selection of nodes is performed so as to ensure that all nodes within a given network distance, in particular a hop count, receive broadcast messages from the node whilst the reception of replications of broadcast messages is avoided, in particular by performing the multipoint relay algorithm.

20. Method according to claim 18 or 19, wherein a node, which receives a query message or a stop-query-propagation message by broadcast, performs the steps of:
determining whether the node is a selected forward node for the node from which it received the broadcast message; and
forwarding the received broadcast message to other nodes if the node is selected, or otherwise discarding the received broadcast message.

21. Apparatus for disseminating, storing and collecting information to/from a set of network nodes in a communication network, comprising
sending means (3) adapted for broadcasting, to other network nodes, query messages indicating a requested information and response messages including the requested information;
receiving means (2) adapted for receiving query messages and response messages from other network nodes;
a message buffer (4) for storing received query messages;
an information storage (5) for storing information of interest to be disseminated and/or accessed by the apparatus and/or by other nodes;
query propagation control means (6) adapted to determine whether information requested with a received query message is stored in the information storage (5) and,
in the positive, to return a response message via the sending means (3) to the inquiring node, or
in the negative, to store the query message in the message buffer (4) and to listen for a predetermined query message delay time, via the receiving means (2), for a response message corresponding to the query, wherein the query propagation control means (6) mark the query as replied without further forwarding it, if a corresponding response is received within the query message delay time DW for the query, or forward, via the sending means (3), the query message to other nodes, if no corresponding response is received within the query message delay time.

22. Apparatus according to claim 21, comprising response propagation control means (7) adapted to, upon receiving a response message, which corresponds to a query message which has not been initiated by the apparatus:
determine whether the apparatus has forwarded the respective query message corresponding to the received response; and,
in the positive, forward the received response message to the node from which the corresponding query has been received, or discard the received response message, otherwise.

23. Apparatus according to claim 21 or 22, comprising information storage maintenance means (8) adapted to hold information received with a response message for a predetermined information holding time in the information storage (5), in particular as a key - value pair, and to delete the information from the information storage (5) after its respective information holding time has elapsed.

24. Apparatus according to at least one of claims 21 to 23, wherein the query propagation control means (6) are further configured to decide whether to generate a stop-query-propagation message for canceling the propagation of an already sent query message in the network when a response message corresponding to the query message is received, and, in the affirmative, to broadcast the stop-query-propagation message to other nodes.

25. Apparatus according to at least one of claims 21 to 24, wherein the query propagation control means (6) are further configured to control the forwarding of a received stop-query-propagation message depending on whether the corresponding query message or a response message related thereto has already been received and/or forwarded by the apparatus, wherein, if it is decided to forward a received stop-query-propagation message, the stop-query-propagation message is immediately forwarded without delay.

26. Apparatus according to at least one of claims 21 to 25, comprising forward node selection means (9) adapted to determine, from the network nodes, a set of nodes which are selected for forwarding broadcast messages from the apparatus, and to inform the respective nodes of being selected as forwarding nodes for the apparatus.

27. Apparatus according to at least one of claims 21 to 26 wherein the query propagation control means (6) are further configured to
determine whether the apparatus is a selected forward node for the node from which it received the broadcast message; and
to forward the received broadcast message to other nodes if the apparatus is selected, or to discard the received broadcast query or stop-query-propagation message, otherwise.

28. Apparatus according to at least one of claims 21 to 27, wherein the sending means (3) and/or receiving means (2) are adapted to send/receive messages to/from an ad-hoc network.

29. Computer program product directly loadable into the internal memory of a digital computer, comprising software code portions for performing the steps of at least one of claims 1 to 20 when said product is run on the computer.
